(19) **Europäisches Patentamt**

**European Patent Office**

**Office européen des brevets**

(11) **EP 1 018 773 A1**

(12) **EUROPEAN PATENT APPLICATION**
published in accordance with Art. 158(3) EPC

(43) Date of publication:
**12.07.2000 Bulletin 2000/28**

(51) Int. Cl.$^7$: **H01M 4/66**, H01M 4/70,
H01M 4/02, H01M 4/58,
H01M 10/40

(21) Application number: **99917104.4**

(22) Date of filing: **22.04.1999**

(86) International application number:
**PCT/JP99/02145**

(87) International publication number:
**WO 99/56332 (04.11.1999 Gazette 1999/44)**

(84) Designated Contracting States:
**DE FR GB NL**

(30) Priority: **24.04.1998 JP 11459798**

(71) Applicant: **Hitachi, Ltd.**
**Chiyoda-ku, Tokyo 101-8010 (JP)**

(72) Inventors:
- **KANEDA, Junya**
 **Hitachi, Ltd.**
 **Hitachi-shi Ibaraki 319-1221 (JP)**
- **KONDO, Yasuo**
 **Hitachi, Ltd.**
 **Hitachi-shi Ibaraki 319-1221 (JP)**
- **ITABASHI, Takeyuki**
 **Hitachi, Ltd.**
 **Hitachi-shi Ibaraki 319-1221 (JP)**

- **TAKEUTI, Seiji**
 **Hitachi, Ltd.**
 **Hitachi-shi Ibaraki 319-1221 (JP)**
- **MURANAKA, Yasushi**
 **Hitachi, Ltd.**
 **Hitachi-shi Ibaraki 319-1221 (JP)**
- **INAGAKI, Masahisa**
 **Hitachi, Ltd.**
 **Hitachi-shi Ibaraki 319-1221 (JP)**
- **AONO, Yasuhisa**
 **Hitachi, Ltd.**
 **Hitachi-shi Ibaraki 319-1221 (JP)**

(74) Representative:
**Hackney, Nigel John et al**
**Mewburn Ellis,**
**York House,**
**23 Kingsway**
**London WC2B 6HP (GB)**

(54) **LITHIUM SECONDARY CELL**

(57) In order to eliminate the causes of deterioration due to the properties of the copper-made negative electrode current collector of a lithium secondary batter, the battery produced so as to have needle-like projections on its surface by a process comprising a step of forming a whisker-like copper oxide on the surface of a thin copper plate to which a negative electrode active material adheres, and then reducing the whole or part of said copper oxide by a chemical or electrical treatment, and if necessary, a step of nickel-plating said surface, overcomes the above defects and has excellent charge and discharge cycle performance.

FIG. 5

EP 1 018 773 A1

## Description

TECHNICAL FIELD

The present invention relates to a novel non-aqueous electrolyte-activated lithium secondary battery, a process for producing such a battery, and a novel composite member.

BACKGROUND ART

In the field of electronic devices, efforts are being made for miniaturization of the devices to comply with the increasing demand for portable models and handy use of the devices. This calls for the development of a battery, especially secondary batter, with high energy density. Lithium secondary battery is a candidate for the next-generation secondary battery that can meet the above requirement. Lithium secondary battery, as compared with nickel cadmium battery, lead storage battery and nickel hydrogen battery, has a higher voltage and a higher energy density and is also smaller in weight.

In the lithium secondary batteries, lithium cobalt oxide, lithium nickel oxide, lithium manganese oxide or their composite oxides are used as a positive electrode active material, while carbonaceous materials such as graphite and amorphous carbon are used as a negative electrode active material. A metallic foil is used as a current collector for picking up an electric current from such positive electrode and negative electrode active materials and guiding it to a battery terminal. Especially a copper foil is popularly used as a negative electrode current collector since it does not form a compound with lithium and has an advantage of being well conductive and inexpensive. There are two types of copper foil: rolled foil manufactured by rolling copper and electrolytic foil produced by electrolytic precipitation.

Rolled foil is of high strength but has disadvantages in that its adhesive strength to the active material is low because of the smooth surface. Therefore, in repetition of the charge and discharge cycle, the active material comes off at the adhesive interface with the rolled foil, resulting in a reduced charge and discharge capacity and a shortened cycle life. On the other hand, electrolytic foil has good adhesion to the active material as its surface is roughened to a certain extent, but it is low in strength and vulnerable to troubles such as cracking in the course of charge and discharge of the battery, which leads to a decline of charge and discharge capacity and diminishment of the cycle life of the battery.

Hitherto, in applying an active material on the negative electrode current collector, it has been common practice to interpose a resin so as to maintain adhesion between them. JP-A 8-213050 teaches use of an electrolytic metal foil whose surface is not smooth but has a moderate degree of roughness, especially use of an electrolytic copper foil having the said surface condition as the negative electrode current collector, so as to elevate the adhesive strength to the active material layer by virtue of the anchor effect and to prevent the active material from coming off the negative electrode current collector. However, use of such an electrolytic copper foil involves the problem that the current collector itself is subject to trouble in repeated cycles of charge and discharge.

JP-B 2-17953 and JP-B 7-116640 propose the methods for roughening the copper surface of the printed board, but they give no disclosure regarding lithium secondary battery and specific means for roughening the foil surface.

DISCLOSURE OF INVENTION

An object of the present invention is to provide a lithium secondary battery with excellent charge and discharge cycle characteristics and a process for producing such a battery.

Another object of the present invention is to provide a composite member having a coat of a mixture of an inorganic powder and a resin with high adhesion to the metallic plate surface.

The present invention provides a lithium secondary battery comprising a negative electrode having a negative electrode active material on the surface of a current collector made of a thin metallic plate, said active material occluding or releasing lithium ions during charge and discharge of the battery, a positive electrode having an positive electrode active material on the surface of a current collector made of a thin metallic plate, and a lithium ion conductive non-aqueous electrolyte or a polymeric electrolyte, characterized in that:

    (A) the substantial surface area of the current collector of at least one of said negative electrode and positive electrode is two or more times as large as the apparent surface area, and/or

    (B) provided that the discharge capacity after 5 cycles of charge and discharge at a discharge current of 400 mA, an upper limit voltage of 4.2 V and a lower limit voltage of 2.5 V is 100%, the discharge capacity after 200 cycles of said charge and discharge is 85% or more based on the above criterion, and/or

    (C) in the current collector of at least one of said negative electrode and positive electrode, a bar-like metal layer made of a metal composing said negative electrode or positive electrode is formed on the surface of said current collector where said negative electrode active material or positive electrode active material is formed, and/or

(D) said negative electrode active material comprises flake graphite or lumpy amorphous carbon powder or metal powder, and/or

(E) the current collector of at least one of said negative electrode and positive electrode is made of an as-cold-rolled thin metallic plate.

The present invention also provides a process for producing a lithium secondary battery comprising the negative electrode having a negative electrode active material on the surface of a current collector made of a thin metallic plate, said active material occluding or releasing the lithium ions during charge or discharge of the battery, the positive electrode having an positive electrode active material on the surface of a current collector made of a thin metallic plate, and a lithium ion conductive non-aqueous electrolyte or a polymeric electrolyte, characterized in that

(A) before the active material is formed on the surface of the current collector of at least one said negative electrode and positive electrode, a whisker-like oxide layer is formed on said collector surface, and then said oxide layer is reduced, and/or

(B) after the current collector made of a thin metallic plate of at least one of said negative electrode and positive electrode has been worked to a desired thickness by cold-rolling, the worked surface is roughened and said active material is formed on the roughened surface.

The present invention further provides a composite member in which a thin layer made of a mixture of an inorganic powder and a resin is formed on a metallic plate surface, characterized in that a bar-like metal layer made of the metal of said metallic plate is formed on the surface side of said metallic plate where the said thin layer is formed.

BRIEF DESCRIPTION OF DRAWINGS

FIG. 1 is a graph showing the relation between the ratio of substantial surface area/apparent surface area and the oxidation treatment time.
FIG. 2 is a graph showing the relation between the rate of the particles which separated and the ratio of substantial surface area/apparent surface area.
FIG. 3 is a graph showing the relation between the rate of the particles which separated and the ratio of substantial surface area/apparent surface area.
FIG. 4 is a graph showing the relation between the rate of the particles which separated and the ratio substantial surface area/apparent surface area.
FIG. 5 is a partial sectional view of a lithium secondary battery according to the present invention.
FIG. 6 is a perspective view illustrating a mode of assembling the positive electrode, the negative electrode and separators.
FIG. 7 is a graph showing the relation between capacity retention and substantial/apparent surface area.
FIG. 8 is a sectional view of a coin type lithium secondary battery.
FIG. 9 is a sectional view of a square type lithium secondary battery according to the present invention.
FIG. 10 is a perspective view of a combination of batteries according to the present invention.

BEST MODE FOR CARRYING OUT THE INVENTION

The lithium secondary battery of the present invention comprises a negative electrode having a negative electrode active material on the surface of a current collector made of a thin metal plate, said active material occluding or releasing lithium ions during charge or discharge of the battery, a positive electrode having a positive electrode active material on the surface of a current collector made of a thin metal plate, and a lithium ion conductive non-aqueous electrolyte or a polymeric electrolyte, characterized in that the substantial surface area of the current collector of at least one of said negative electrode and positive electrode is two or more times as large as the apparent surface area.
Also, the lithium secondary battery of this invention comprises a negative electrode having a negative electrode active material on the surface of a current collector made of a thin metallic plate, said active material occluding or releasing lithium ions during charge or discharge of the battery, a positive electrode having an positive electrode active material on the surface of a current collector made of a thin metallic plate, and a lithium ion conductive non-aqueous electrolyte or a polymeric electrolyte, characterized in that provided that the discharge capacity after 5 cycles of charge and discharge at a discharge current of 400 mA, an upper limit voltage of 4.2 V and a lower limit voltage of 2.5 V is 100%, the discharge capacity after 200 cycles of said charge and discharge is 85% or more based on the above criterion.

The lithium secondary battery of this invention also comprises a negative electrode having a negative electrode active material on the surface of a current collector made of a thin metallic plate, said active material occluding or releasing lithium ions during charge or discharge of the battery, a positive electrode having a positive electrode active material on the surface of a current collector made of a thin metallic plate, and a lithium ion conductive non-aqueous electrolyte or a polymeric electrolyte, characterized in that in the current collector of at least one of said negative electrode and positive electrode, a bar-like metal layer made of the metal composing said negative electrode or positive electrode formed on the surface of said current collector where said negative electrode or positive electrode active material is formed.

The lithium secondary battery of the present invention further comprises a negative electrode having a negative electrode active material on the surface of a current collector made of a thin metallic plate, said active material occluding or releasing lithium ions during charge or discharge of the battery, a positive electrode having a positive electrode active material on the surface of a current collector made of a thin metallic plate, and a lithium ion conductive non-aqueous electrolyte or a polymeric electrolyte, characterized in that said negative electrode active material comprises flake graphite or a bulk amorphous carbon powder and a metal powder.

The lithium secondary battery of the present invention also comprises a negative electrode having a negative electrode active material on the surface of a current collector made of a thin metallic plate, said active material occluding or releasing lithium ions during charge or discharge of the battery, a positive electrode having a positive electrode active material on the surface of a current collector made of a thin metallic plate, and a lithium ion conductive non-aqueous electrolyte or a polymeric electrolyte, characterized in that the current collector of at least one of said negative electrode and positive electrode comprises a cold-rolled thin metallic plate.

The lithium secondary battery of the present invention is also preferably the one in which the current collector of at least one of said negative electrode and positive electrode has on its surface a layer of a metal having higher hardness than the base metal of said collector.

In the lithium secondary battery of the present invention, it is also preferable that at least one of said negative electrode active material and positive electrode active material contains graphite in which preferably the ratio of rhombohedral system crystal is 20% by weight or less and the ratio of hexagonal system crystal is 80% by weight or more.

The lithium secondary battery according to the present invention preferably comprehends at least two, optionally up to 7, of the above-described seven features of the invention.

The present invention also provides a process for producing a lithium secondary battery comprising a negative electrode having a negative electrode active material on the surface of a current collector made of a thin metallic plate, said active material occluding or releasing lithium ions during charge or discharge of the battery, a positive electrode having a positive electrode active material on the surface of a current collector made of a thin metallic plate, and a lithium ion conductive non-aqueous electrolyte or a polymeric electrolyte, characterized in that the process includes a step in which before forming said active material on the surface of the current collector of at least one of said negative electrode and positive electrode, a whisker-like oxide layer is formed on the surface of said collector, and then said oxide layer is reduced.

The process of the present invention preferably contains a step in which after said reducing treatment and before forming said active material on the reduced surface of the collector, a coat of a metal harder than the metal of said collector is formed on the collector surface.

The present invention also provides a process for producing a lithium secondary battery comprising a negative electrode having a negative electrode active material on the surface of a current collector made of a thin metallic plate, said active material occluding or releasing lithium ions during charge or discharge of the battery, a positive electrode having a positive electrode active material on the surface of a current collector made of a thin metallic plate, and a lithium ion conductive non-aqueous electrolyte or a polymeric electrolyte, characterized in that the process includes a step in which the current collector made of a thin metallic plate of at least one of said negative electrode and positive electrode is cold-rolled to a desired thickness, then the worked surface is roughened and said active material is formed on the roughened surface.

The process of the present invention preferably comprehends a combination of two or three of the above-described 3 features of the invention.

The present invention further provides a composite member comprising a metallic plate having formed on its surface a thin layer of a mixture of an inorganic powder and a resin, characterized in that a bar-like metal layer made of the metal of said metallic plate is formed on the side of the metallic plate where the said thin layer is formed.

Here, the "bar-like metal layer" means a layer of a bar- or whisker-like metal which exists with high density on the metallic plate surface, and is interposed between said metallic plate and said thin layer of an inorganic powder and resin mixture. The bar metal layer preferably measures 5 to 50 nm in diameter and 50 to 1,000 nm in length.

The composite member of the present invention can be produced by the same production process as used for the current collector described above.

The present inventors conceived that the deterioration of battery performance attributable to the properties of the copper-made negative electrode current collector is caused by weakening of adhesion between the negative electrode current collector and the negative electrode active material, and that it should be possible to improve the battery performance by strengthening said adhesion. The present invention has been attained on the basis of this conception. According to the present invention, the positive electrode current collector can also be worked to have a similar surface.

The positive electrode and negative electrode active materials are preferably the particles having a diameter of usually 100 μm or less, and the above-said object can be achieved by improving adhesion between the current collector material (aluminum or copper) and the said particles.

For letting metal and particles adhere to each other, it is expedient that the metal surface to which the particles are to be attached be previously subjected to a treatment comprising at least the step of forming an oxide on the surface, the step of reducing the whole or part of said oxide by a chemical or electrical treatment, and if necessary the step of conducting nickel plating on the surface. The thus treated copper surface assumes a roughened state as compared with the pre-treatment surface. The copper surface which had said treatment without nickel plating does not manifest metallic luster of copper but assumes a dark brown to black hue due to scatter of light caused by the roughened surface. As means for bonding the particles to the surface-roughened copper, a method is known in which a mixture of the particles and a resin is coated on the surface-roughened copper and then pressed and heated. There is also available a method in which a slurry formed by kneading the particles and a solvent having a resin dissolved therein is applied on said copper, followed by pressing and heating. In this case, pressing and heating may be conducted either separately or simultaneously. In either case, the intended effect of the present invention can be obtained.

The metal which has been surface-roughened by the above treatment is improved in adhesion to the particles, and it is especially desirable that the ratio of the substantial surface area to the apparent surface area is 2 or above. Here, the "apparent surface area" means the surface area which can be determined by simple calculations from the shape. For instance, in the case of a 20 μm thick and 100 mm square metal foil, its apparent surface area is 20,000 $mm^2$ on the two surfaces. The surface-roughened metal foil, obtained by conducting said treatment on both sides of a metal foil having an apparent surface area S ($mm^2$), has the same apparent surface area (S $mm^2$). Assuming that the weight of the surface-roughened metal foil is M (g) and that the specific surface area of the roughened metal foil as determined by the BET method is ρ ($mm^2/g$), then the substantial surface area determined from the specific surface area is given by $ρ \times M$ ($mm^2$). Hence, the value of substantial surface area/apparent surface area is $(ρ \times M)/S$ .

In the present invention, the substantial surface area is preferably two or more times, more preferably three or more times the apparent surface area, and for obtaining the stabilized properties, it is preferable that the former is four or more times as large as the latter. The upper limit value of the substantial surface area is preferably 30 or below, more preferably 20 or below, especially 15 or below. The thickness of the metal foil of the current collector is preferably 5 to 30 μm, more preferably 8 to 20 μm.

As the metal of the metal foil of the current collector, aluminum is used for the positive electrode and copper for the negative electrode. The surface-roughened metal foil used in the present invention is preferably the one obtained from a process in which a base metal foil which has simply been rolled, such as cold-rolled, without undergoing other treatment is worked to a desired thickness, then the worked surface is roughened and the positive electrode or negative electrode active material is applied thereon, while maintaining high surface strength, followed by pressure molding. Annealing may be conducted after rolling. It is preferable to adjust the surface hardness by controlling the annealing temperature in relation to pressure molding.

In the non-aqueous electrolyte secondary battery in which the metal foil, which has previously been subjected to at least the treatment comprising the step of forming a whisker-like oxide layer on the metal surface, the step of reducing the whole or part of said oxide layer by chemical or electrical treatment, and if necessary the step of conducting plating with a metal, such as nickel, having a greater hardness than the base metal of the current collector, is used as the positive electrode or negative electrode current collector to improve adhesion to the positive electrode or negative electrode active material, there hardly takes place separation or debonding of the positive electrode or negative electrode active material during charge and discharge of the battery, and thus the charge and discharge cycle performance is improved.

In order to strengthen the base metal surface of the current collector, it is preferable to provide a layer of a metal harder than the base metal, especially by plating the roughened metal foil surface with a proper metal such as cobalt or nickel to form a coat of such a metal. This metal coat is conducive to strengthening adhesion by preventing flattening in pressure molding when forming a layer of the positive electrode or negative electrode active material, and to increasing corrosion resistance of the copper surface. The thickness of this metal coat is preferably 0.01 to 1 μm.

As the negative electrode active material, the particles of any material capable of occluding and releasing lithium ions are usable. There can be used, for example, graphites, amorphous carbons, pyrolytic carbons, cokes, carbon fiber, metallic lithium, lithium alloys (Li-Al, Li-Pb, etc.), inorganic compounds (carbides, oxides, nitrides, borides, halides, intermetallic compounds, etc.), and the compounds of particulate metals such as aluminum and tin.

The materials other than these metals are preferably of an average particle size of 5 to 30 μm, especially 10 to 20 μm. Since the small particles tend to adversely affect the properties of the material, the smallest particle size is preferably 5 μm or greater while the largest particle size is preferably 50 μm or smaller. Metal powder is effective for elevating film conductivity, its average particle size being preferably 0.1 to 100 μm, more preferably 1 to 50 μm. The graphite used in the present invention is preferably the one comprising 20% by weight or less, more preferably 5 to 15% by weight of rhombohedral system crystal and 80% by weight or more of hexahedral system crystal.

As the positive electrode active material, there can be used the composite oxides such as lithium-cobalt oxide ($Li_X CoO_2$), lithium-nickel oxide ($Li_X NiO_2$), lithium-manganese oxide ($Li_X Mn_2 O_4$, $Li_X MnO_3$), and lithium-nickel-cobalt oxide ($Li_X NiYCo_{(1-y)} O_2$). In the above formulae, $0 \leqq x \leqq 1.2$ and $0 \leqq y \leqq 1$. That is, these oxides may be either of the stoichiometric composition or of a composition slightly deviant therefrom. The average particle size of these materials is preferably 3 to 40 μm, more preferably same as the particle size of the material other than the metal used as the negative electrode active material.

As the separator, there can be used the sheet-like one through which ion conductivity of the electrolyte is low and which have no reactivity with the electrolyte and show excellent solution retainability. As the sheet-like separator, the porous films made of polypropylene, polyethylene, polyolefin, polyester, polytetrafluoroethylene, polyfuron, etc., and nonwoven fabrics composed of glass fiber and said polymeric substances can be used. A porous film made of polypropylene, polyethylene or polyolefin is especially preferred. As the polymeric electrolyte, there can be used, for instance, the composites obtained by dissolving said electrolytes in a polymer matrix comprising polyethylene oxide, polypropylene oxide, polyvinylidene fluoride, polyacrylamide or the like; the polymeric electrolytes obtained by grafting an ion dissociating group such as gel crosslinker containing a solvent, low-molecular weight polyethylene oxide, crown ether or the like to the polymer backbone; and the gel-like polymeric electrolytes obtained by impregnating the polymeric substances with said electrolytes.

As the electrolytic solution, the organic solvents having a lithium salt dissolved therein as the electrolyte can be used. The organic solvents usable in this invention include, for example, butylene carbonate, propylene carbonate, diethyl carbonate, ethyl methyl carbonate, ethylene carbonate, dimethyl carbonate, methyl carbonate, 1,2-dimethoxyethane, 1,2-diethoxyethane, ethoxymethoxyethane, γ-butyrolactone, γ-valerolactone, dipropyl carbonate, tetrahydrofuran, 2-methyltetrahydrofuran, dioxane, dimethyl sulfoxide, sulfolane, methylsulforan, acetonitrile, methyl acetate, methyl formate and the like. These solvents may be used as a mixture of two or more of them.

As the electrolyte, there can be used lithium salts such as lithium hexafluorophosphate ($LiPF_6$), lithium borofluoride ($LiBF_4$), lithium perchlorate ($LiClO_4$), bistrifluoromethylsulfonylimidolithium ($LiN(CF_2 SO_2)_2$), arseno-lithium hexafluoride ($LiAsF_6$), lithium trifluoromethanesulfonate ($LiCF_2 SO_3$) and the like. Of these lithium salts, lithium hexafluorophosphate ($LiPF_6$), lithium borofluoride ($LiBF_4$), lithium perchlorate ($LiClO_4$) and bistrifluoromethylsulfonylimidolithium ($LIN(CF_2 SO_2)_2$) are preferred. The solvent rate of the electrolyte based on the organic solvent is preferably 0.5 to 2 mol/l.

As the conductive material used as said negative electrode and positive electrode active material, flake graphite, bulk amorphous carbon and bulk graphite are preferred. The average particle size of these conductive materials is 10 to 30 μm or less, and their specific surface area is preferably 2 to 300 $m^2/g$, more preferably 15 to 280 $m^2/g$. It is also preferable to use short carbon fibers having a diameter of 5 to 10 μm and a length of 10 to 30 μm. In case of using flake graphite or bulk amorphous carbon powder as the negative electrode active material, it may contain metal powder in an amount of 30% by weight or less, preferably 15% by weight or less. When metal powder is contained, however, it is preferably used in the form of a mixture with carbon powder. This is of course of no significance in case of using a composite powder of a metal or inorganic compound and carbon. In this case, the ratio of the metal or inorganic compound is preferably 40% by weight or less, more preferably 5 to 30% by weight.

The negative electrode and positive electrode active material, conductive material and current collector are interconnected by a binder and bonded to the collector surface. As the binder, the resins such as polyvinylidene fluoride (PVDF), ethylene-propylene-diene copolymer (EPDM), polytetrafluoroethylene (PTFE), polyethylene, polypropylene, polystyrene, polyvinyl pyridine, chlorosulfonated polyethylene, latex and the like can be used. In the depolarizing mix combining the active material, conductive material and binder, the ratio of the binder is preferably 2 to 20% by weight. It is particularly preferable that the ratio of the binder of the positive electrode is 2 to 10% by weight and the ratio of the binder of the negative electrode is 5 to 15% by weight.

In the non-aqueous electrolyte secondary battery to which the present invention has been applied, the negative electrode current collector surface is roughened to a moderate degree, so that a greater anchor effect than provided by the negative electrode current collector with a flat surface is produced, and the adhesive strength between the negative electrode active material and the negative electrode depolarizing mix containing a resin is improved. This makes it possible to prevent debonding or separation of the negative electrode depolarizing mix incidental to expansion or contraction of the negative electrode active material during charge or discharge of the battery, and to improve the charge and discharge cycle performance of the non-aqueous electrolyte secondary battery.

The lithium secondary battery of the present invention can be effectively used for various types of portable electronic devices.

In the following, adhesion between copper and particles and the non-aqueous electrolyte secondary batteries to which the present invention has been applied are explained with reference to the accompanying drawings. The present invention, however, is not limited to these embodiments.

Example 1

A 0.1 mm thick, 100 mm square cold-rolled plate of tough pitch copper was used. This copper plate was surface treated according to the following process.

First, the said copper plate was degreased by

C4000                      50 g/l
liquid temperature         55°C

and then washed with water. It was then treated with

ammonium disulfate [$(NH_4)_2S_2O_4$]      200 g/l
sulfuric acid                              5 ml/l
liquid temperature                         30°C

and washed with water. The plate was then pickled with

sulfuric acid ($H_2SO_4$)      3 ml/l

and washed with water. It was further subjected to an oxidation treatment with

sodium chlorate ($NaCl_3O$)                    109 g/l
sodium phosphate ($Na_3PO_4 \cdot 12H_2O$)     30 g/l
sodium hydroxide (NaOH)                        15 g/l
liquid temperature                            75°C

to form a copper oxide on the surface of the copper plate. After washed with water, the plate was subjected to a reducing treatment with

dimethylamineboran [$(CH_3)_2NHBH_3$]      6 g/l
sodium hydroxide (NaOH)                    5 g/l
liquid temperature                         45°C

The plate was then cleaned with pure water and hot-air dried. These treatments were carried out by immersing the plate in a stirred solution for the respectively predetermined periods of time.

C4000 is an agent for removing dirt on the copper plate surface after rolling. NaOH was added to make pH 11 to 13. A surfactant was further added thereto. Ammonium disulfate acts for dissolving the copper surface and sulfuric acid serves for dissolving the copper oxide.

The conditions of surface treatment can be controlled by adjusting the time and temperature of the oxidation treatment and the treating solution concentration. Here, the copper plates were made by varying the treating time: 60 seconds, 120 seconds and 300 seconds. Scanning electron microscopic observation of the treated copper plate surface confirmed that the plate surface tended to become rougher as the oxidation treating time elongated. The specific surface area was measured by the BET method using Kr gas to determine the substantial surface area. The ratio of the substantial surface area to the apparent surface area of the copper plate is shown in Table 1. In the table, Run No. 1 is a comparative example where an as-rolled copper plate not subjected to said series of treatments was used.

Table 1

| Run No. | Oxidation treating time (sec) | Substantial surface area/apparent surface area |
|---|---|---|
| 1 | 0 | 0.7 |
| 2 | 60 | 3.3 |
| 3 | 120 | 6.5 |
| 4 | 300 | 12.4 |

As is seen from Table 1, surface roughening of the copper plate advances as the oxidation treating time elongates. In Comparative Example 1, the ratio of substantial surface area/apparent surface area is less than 1. This is due to the error in the measurement of specific surface area by the BET method used in the instant Example. Therefore, the determined values of the ratio of substantial surface area/apparent surface area of the respective samples include errors of this order.

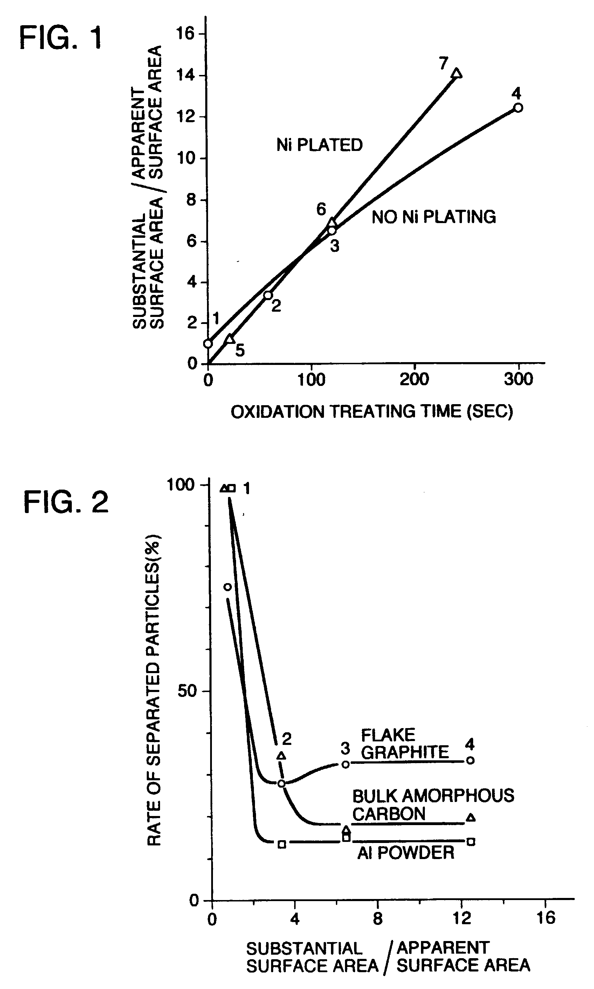

FIG. 1 is a graph showing the relation between the ratio of substantial surface area/apparent surface area and the oxidation treating time. As is seen from the graph, the substantial surface area increases almost linearly with elongation of the oxidation time, and the ratio of substantial surface area/apparent surface area becomes greater than 3 in about one minute, and shows a gentle curve of increase when the treating time passes 200 seconds.

Electron microscopic observation of the plate surface after subjected to the 300-second oxidation treatment in this Example showed formation of a whisker-like oxide with a diameter of 1 to 30 nm and a length of 50 to 200 nm. As a result of the ensuing reducing treatment, the bar-like films with a diameter of 5 to 20 nm were found formed in an erect state, with their length measuring 100 to 500 nm, while slightly entangled with each other on the plate surface. Their diameter and length are subject to change according to the treating time.

Next, adhesion between the copper plate and the particles is explained. As the particles, flake graphite with an average particle diameter of about 25 $\mu$m, bulk amorphous carbon with an average particle diameter of 15 $\mu$m and aluminum powder with an average particle diameter of 30 $\mu$m were used. The respective particles and an N-methylpyrrolidone solution having polyvinylidene fluoride dissolved therein were kneaded together to form a slurry, and this slurry was coated on the copper plates shown in Table 1. The ratio by weight of the particles to polyvinylidene fluoride in the slurry was 90 : 10. Each of the slurry-coated copper plates was dried in the atmosphere, then pressed under the force of 500 kg/cm$^2$ for increasing the film density, and further dried in vacuo at 120°C. Each of the thus produced particle-adhering copper plates was cut so that the plate would have a particle-adhering area of 4 cm2, and a commercial adhesive tape was attached thereto so as to cover the entirety of the particle-adhering portion. Adhesion between the copper plate and the particles was eyaluated by the rate of the particles which were separated when the adhesive tape was peeled off. The results are shown in Table 2.

Table 2

| Run No. | Rate of the particles which separated when adhesive tape was peeled off (wt%) | | |
|---|---|---|---|
| | Flake graphite | Bulk amorphous carbon | Aluminum |
| 1 | 75 | 99 | 99 |
| 2 | 28 | 35 | 13 |
| 3 | 34 | 17 | 15 |
| 4 | 34 | 19 | 13 |

In Table 2, the smaller the rate of the particles separated when the adhesive tape is peeled off, the stronger is adhesion between the copper plate and the particles. The results show that the copper plates which have been subjected to the surface roughening treatments by oxidation and reduction had higher adhesion to the particles than the as-rolled copper plate. Also, although adhesion differs depending on the type and size of the particles, the surface-roughened copper plates were improved in adhesion to the particles as compared with the as-rolled copper plate.

FIG. 2 is a graph showing the relation between the rate of the separated particles and the ratio of substantial surface area/apparent surface area. As is seen from the graph, in the case of flake graphite and Aℓ powder, the particle separation rate is substantially saturated at 35% or below in the former and 15% or below in the latter when the substantial surface area ratio becomes 2 or greater. It is also seen that in the case of amorphous carbon, the particle separation rate becomes 25% or below when the substantial surface area ratio is 4 or greater.

Example 2

Next, the method of treating the nickel-plated copper foil and the results of the adhesion test are described. Like in Example 1, the 0.1 mm thick, 100 mm square cold-rolled plates of tough pitch copper were used, and these copper plates were surface treated according to the following process.

First, each of the said copper plates was degreased with

C4000          50 g/l
temperature    55°C

and then washed with water. Next, the plate was pickled with

HCl     5 ml/l

then treated with

$(NH_4)_2S_2O_4$          200 g/l
$H_2SO_4$                  5 ml/l
liquid temperature         30°C

and then washed with water. The plate was then pickled with

$H_2SO_4$     3 ml/l

and washed with water. Thereafter, the plate was washed with warm water of 60°C and subjected to an oxidation treatment with

$NaClO_3$                    109 g/l
$Na_3PO_4 \cdot 12H_2O$      30 g/l
NaOH                         15 g/l
liquid temperature           75°C

to form a copper oxide on the copper plate surface. After washing with water, the plate was subjected to a reduction treatment with

$(CH_3)_2NHBH_3$          6 g/l
NaOH                      5 g/l
liquid temperature        45°C

The plate was again washed with water and immersed in

$(CH_3)_2NHBH_3$          2 g/l
liquid temperature        45°C

and then immersed in

Top Chemialloy H-30   100 ml/l
liquid temperature        50°C

Then the plate was cleaned with pure water and hot-air dried. In order to obtain the copper plates of various surface treated conditions, there were prepared in this Example, too, the copper plates by varying the oxidation treating time: 20 seconds, 120 seconds and 300 seconds, as in Example 1. Nickel plating was carried out using an electroless Ni-B plating solution. The Ni plating bath was of the following composition:

| | |
|---|---|
| nickel sulfate | 0.04 mol/l |
| sodium citrate | 0.25 mol/l |
| dimethylamineboran | 0.7 mol/l |
| boric acid | 0.5 mol/l |
| pH = 9.15 | |
| liquid temperature | 50°C |

Electroless plating in this Example is preferred to electroplating as a deposit of higher hardness can be obtained. Since the nickel particles accumulate on the roughened surface to eliminate the roughened state as the plating time is prolonged, the nickel plating time was set at 120 seconds. Scanning electron microscopic observation of the treated copper plate surface confirmed that as in Example 1 the plate surface tended to become rougher as the oxidation treating time elongated. There was observed no sign of loss of the roughened state by nickel plating. Further, the specific surface area was measured to determine the ratio of substantial surface area/apparent surface area, the results being shown in Table 3.

As is seen from Table 3, the substantial surface area ratio increases linearly with the treating time, becoming 3 or greater in about one-minute treatment. The result of electron microscopic observation of the plate surface was the same as in Example 1.

Table 3

| Run No. | Oxidation treating time (sec) | Substantial surface area/apparent surface area |
|---|---|---|
| 5 | 20 | 1.2 |
| 6 | 120 | 6.8 |
| 7 | 240 | 14.1 |

Next, adhesion between the said nickel-plated copper plate and the particles was evaluated in the same way as in Example 1. The results are shown in Table 4.

Table 4

| Run No. | Rate of the particles which separated when adhesive tape was peeled off (wt%) | | |
|---|---|---|---|
| | Flake graphite | Bulk amorphous carbon | Aluminum |
| 5 | 69 | 73 | 77 |
| 6 | 21 | 13 | 12 |
| 7 | 17 | 10 | 12 |

Here, too, adhesion to the particles was bettered with advancement of surface roughening. Also, nickel plating contributed to slight enhancement of adhesion to the particles.

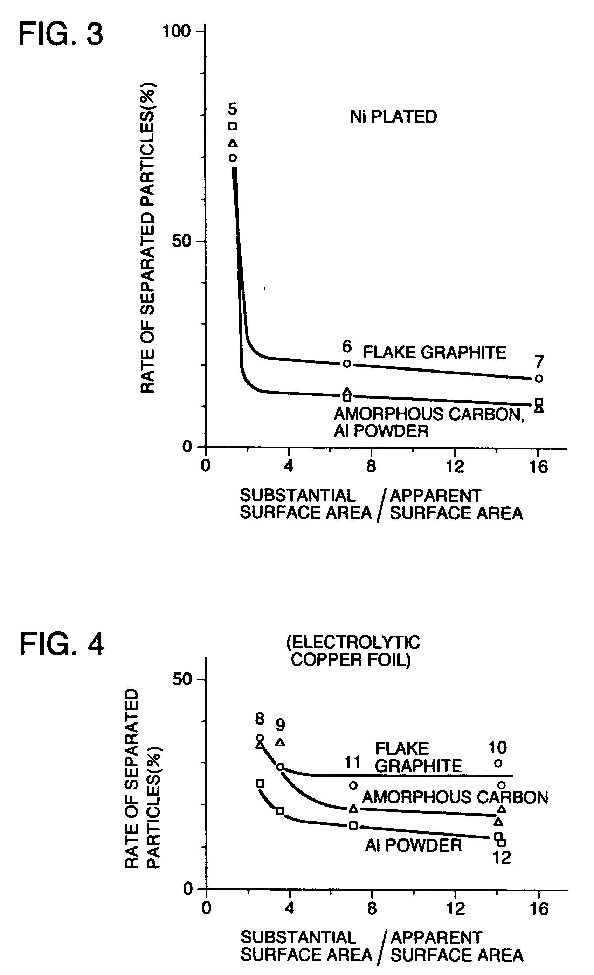

FIG. 3 is a graph showing the relation between the rate of the separated particles and the ratio of substantial surface area/apparent surface area. As is seen from the graph, the separation rate was 25% or below in the case of flake graphite and 15% or below in the case of amorphous carbon and Al powder when the substantial surface area ratio was 2 or greater.

Example 3

Scanning electron microscopic observation of the surface properties and measurement of specific surface area by the BET method were conducted on the samples prepared by performing the surface roughening treatment on a 35 μm thick electrolytic foil under the above-described conditions of Run Nos. 2, 4, 6 and 7, respectively. The result of the scanning electron microscopic observation was the same as the surface condition of the rolled copper plates shown in Examples 1 and 2. The ratio of substantial surface area/apparent surface area determined from the specific surface area is shown in Table 5. In this Example, too, the substantial surface area ratio increased with the treating time in the substantially same mode as the diagram of FIG. 1. The electrolytic copper foil was formed by the prismatic crystals of 0.5 to 2 μm in diameter extending in the direction of accumulation.

Table 5

| Run No. | Oxidation treating time and whether nickel plated or no | Substantial surface area/apparent surface area |
|---|---|---|
| 8 | No surface roughening treatment | 2.6 |
| 9 | 60 sec, No nickel plating | 3.5 |
| 10 | 300 sec, No nickel plating | 13.1 |
| 11 | 120 sec, Nickel plated | 7.0 |
| 12 | 240 sec, Nickel plated | 13.0 |

It was possible to apply nickel plating for the surface roughening treatment of the electrolytic copper foil as in Examples 1 and 2, and the ratio of substantial surface area/apparent surface area was substantially of the same value as that of the 0.1 mm thick copper foil. Run No. 8, which is a comparative example, represents an electrolytic copper foil which has not been subjected to the surface roughening treatment. The surface condition was the same as Example 1.

Adhesion of the particles to the above samples was evaluated in the same way as in Example 1. The results are shown in Table 6.

FIG. 4 is a graph showing the relation between the rate of the particles which separated and the ratio of substantial surface area/apparent surface area. As is seen from the graph, the particle separation rate dropped to 35% or below in the case of flake graphite and amorphous carbon and 25% or below in the case of Al powder when the substantial surface area ratio was made 2 or greater.

Table 6

| Run No. | Rate of the particles which separated when adhesive tape was peeled off (wt%) | | |
|---|---|---|---|
| | Flake graphite | Bulk amorphous carbon | Aluminum |
| 8 | 36 | 35 | 25 |
| 9 | 29 | 35 | 18 |
| 10 | 31 | 19 | 12 |
| 11 | 25 | 19 | 15 |
| 12 | 25 | 17 | 13 |

Here again, adhesion to the particles was strengthened as surface roughening advanced. However, adhesion of the electrolytic copper foil to the particles was better than that of the rolled copper plate.

Example 4

A non-aqueous electrolyte lithium secondary battery having its electrodes made by applying the copper and particle adhering method of the present invention is explained below.

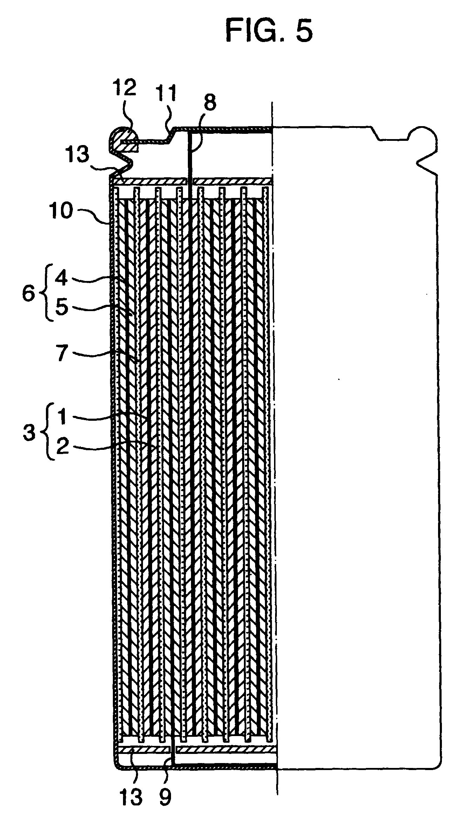

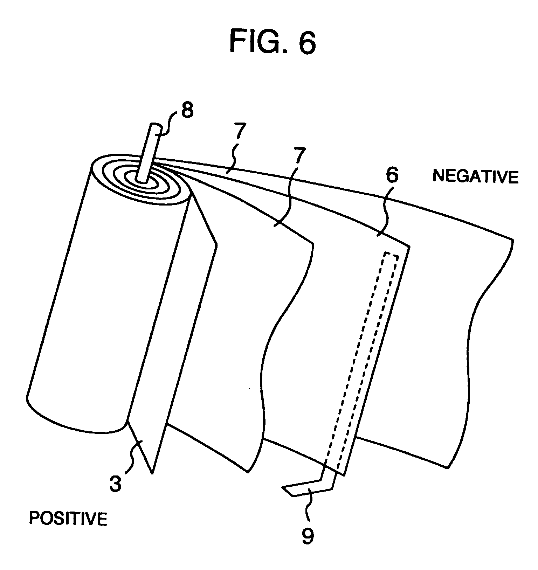

A partial sectional view of the non-aqueous electrolyte secondary battery manufactured in this Example is shown in FIG. 5. The electrode assembly consists of the positive electrode 3 made by applying a positive electrode depolarizing mix 2 on an positive electrode current collector 1, the negative electrode 6 made by applying a negative electrode depolarizing mix 5 on a negative electrode current collector 4, and separators 7, these components being laminated in the order of positive electrode 3, separator 7 and negative electrode 6 and separator 7 and rolled up as shown in FIG. 6. A positive electrode lead 8 and a negative electrode lead 9 are connected to the positive electrode 3 and the negative electrode 6, respectively, of the electrode assembly. This electrode assembly is housed in a battery case 10, with the negative electrode lead 9 being connected to the battery case 10 and the positive electrode lead being connected to the battery cover 11. The battery cover 11 is secured to the battery case 10 through an insulating gasket 12 to seal up the electrode assembly and the inside of the battery case 10. Insulating panels 13 are also provided to prevent the electrode assembly from contacting the battery case 10 or cover 11. An electrolyte formed by dissolving 1 mol/l of lithium hexaflurophosphate ($LiPF_6$) in a 1/2 (by volume) mixed solvent of ethylene carbonate and dimethyl carbonate was injected into the battery case 10 housing the electrode assembly. The contour of the thus manufactured non-aqueous electrolyte secondary battery was 18 mm in diameter and 65 mm high. SUS 304, SUS 316, mild steel with anticorrosive coating and the like can be used for making the battery case 10 and the battery cover 11.

Lithium oxide was used as the positive electrode active material, and a 20 μm thick aluminum foil was used as the positive electrode current collector. A slurry prepared by kneading lithium-cobalt oxide, artificial graphite and an N-methylpyrrolidone solution having polyvinylidene fluoride dissolved therein was coated on both sides of the aluminum foil to a coating thickness of 90 μm for each side, and the coated aluminum foil was dried, press molded and cut to make the positive electrode. The lithium cobalt oxide to artificial graphite to polyvinylidene fluoride ratio in the composition of the positive electrode depolarizing mix 2 was 87 : 9 : 4.

Flake graphite was used as the negative electrode active material and an 18 μm thick rolled copper foil was used as the current collector. A slurry prepared by kneading flake graphite and an N-methylpyrrolidone solution having polyvinylidene fluoride dissolved therein was coated on both sides of a rolled copper foil to a coating thickness of 50 μm for each side, and the coated copper foil was dried, press molded and cut to make the negative pole 6. The flake graphite to polyvinylidene fluoride ratio in the composition of the negative electrode depolarizing mix 5 was 94 : 6.

The said non-aqueous electrolyte secondary battery made from a combination of: positive electrode current collector; aluminum foil - positive electrode active material; lithium cobalt oxide - negative electrode current collector; rolled copper foil - negative electrode active material; flake graphite, was presented as Run No. 13 for a comparative example.

Using a surface-roughened rolled copper foil obtained by surface treating a 20 μm thick rolled copper foil under the same conditions as Run No. 4 of Example 1, there was produced a non-aqueous electrolyte secondary battery by the same process and with the same composition as Run No. 13 (comparative example), and this was presented as Run No. 14.

Using a copper foil made by surface treating a 20 μm thick rolled copper foil under the same conditions as Run No. 7 of Example 2, a non-aqueous electrolyte secondary battery was produced from the same process and with the same composition as Run No. 13 of a comparative example, and this was presented as Run No. 15. The ratio of substantial surface area/apparent surface area was 0.7 in Run No. 13, 12.4 in Run No. 14, and 14.1 in Run No. 15.

The non-aqueous electrolyte secondary batteries of Run Nos. 14 and 15 of the Example and Run No. 13 of the Comparative Example were subjected to a charge and discharge test under the conditions of: charge and discharge current = 400 mA; upper limit voltage = 4.2 V; lower limit voltage = 2.5 V. With the discharge capacity in the fifth cycle of charge and discharge test being given as 100%, the rate of discharge capacity retained in the 200th cycle was determined as the capacity retention rate. Further, the charge and discharge test was stopped in the mode of discharge after continuing 300 cycles of charge and discharge, and the tested non-aqueous electrolyte secondary batteries were disassembled and the condition of the negative electrode was examined. The results are shown in Table 7.

Table 7

| Run No. | Capacity retention rate (%) | Cathode surface condition |
|---|---|---|
| 13 | 73 | Bad |
| 14 | 92 | Good |
| 15 | 93 | Good |

As is seen from Table 7, the non-aqueous electrolyte secondary batteries using a surface-roughened or nickel-plated rolled copper foil as the negative electrode current collector had a higher capacity retention rate than the battery using the non-treated rolled copper foil. Also, in this Example, the condition of the negative electrode after disassembling was good as there was observed no separation or debonding of the depolarizing mix layer which was seen in Run No. 13 of the Comparative Example.

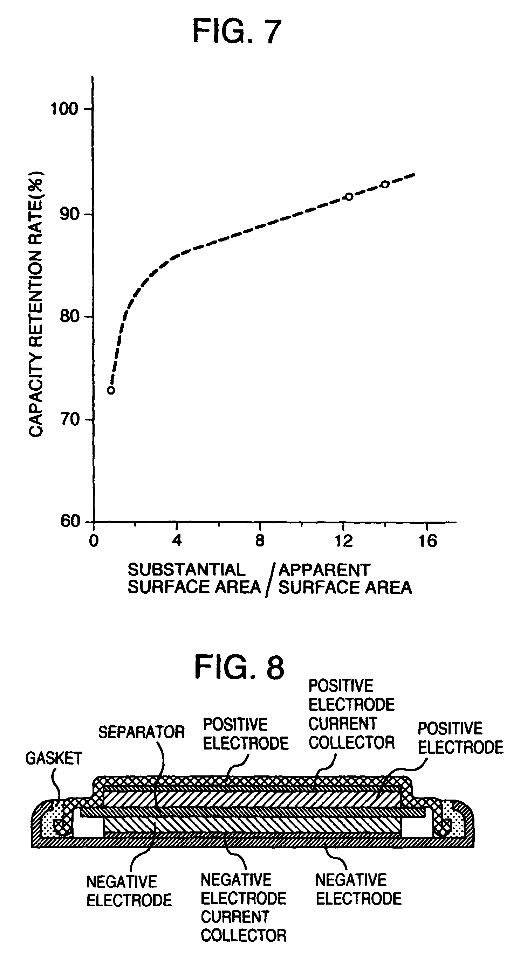

FIG. 7 is a graph showing the relation between the capacity retention rate and the ratio of substantial surface area/apparent surface area. As is noted from the graph, the capacity retention rate drops sharply below 85% when the substantial surface area ratio is made 3 or less. It is also noted that the battery shows a high capacity retention rate above 85% when the substantial surface area is made 3 or more.

Example 5

The lithium secondary battery of the present invention shown in FIG. 5 was manufactured in the following way. A slurry of positive electrode depolarizing mix was prepared by mixing $LiCoO_2$ as the positive electrode active material, 7 wt% of acetylene black as conductive material and 5 wt% of polyvinylidene fluoride (PVDF) as binder, and further adding thereto N-methyl-2-pyrrolidone.

Likewise, a slurry of negative electrode depolarizing mix was prepared by mixing 5 to 20 wt% of rhombohedral system crystal and 80 wt% or more of hexahedral system crystal as the negative electrode active material and 10 wt% of PVDF as binder, and further adding thereto N-methyl-2-pyrrolidone. The graphite powder had an average particle size of 25 μm, and the amount of the rhombohedral system crystal was adjusted by changing the heating time, heating being conducted at 2,850°C.

The positive electrode depolarizing mix was coated on both sides of a 25 μm thick aluminum foil and dried in vacuo at 120°C for one hour. After vacuum drying, it was press molded by a roller press to make the electrodes having a thickness of 195 μm. The depolarizing mix coating build-up per unit area was 55 mg/cm$^2$. A piece with a size of 40 mm in width and 285 mm in length was cut out to make the positive electrode. The 10 mm portions at both ends of the positive electrode were left uncoated with the depolarizing mix, leaving the aluminum foil exposed. An positive electrode tub was secured to one end by ultrasonic bonding.

On the other hand, the negative electrode depolarizing mix was coated on both sides of a 10 μm thick rolled copper foil which has been subjected to the oxidation and succeeding reduction treatments described in Examples 1 and 2, and then dried in vacuo at 120°C for one hour. After vacuum drying, it was press molded into the electrodes of 175 μm in thickness by roller press. The depolarizing mix build-up per unit area was 25 mg/cm$^2$. A piece with the size of 40 mm in width and 290 mm in length was cut out to make the negative electrode. Like the positive electrode, the 10 mm long portions at both ends of the negative electrode were left uncoated with the depolarizing mix, leaving the copper foil exposed, and a negative electrode tub was secured to one end by ultrasonic bonding.

A 25 μm thick, 44 mm wide polypropylene-made microporous film was used as separator. The positive electrode, the negative electrode and the separators were laminated in the order of positive electrode/separator/negative electrode/separator, and rolled up as shown in FIG. 6 to make an electrode assembly. This was housed in a battery case like in Example 5, with a negative electrode tub welded to the bottom of the case, and a constriction was provided for caulking the positive electrode cover. An electrolyte prepared by dissolving 1 mol/l of lithium hexafluorophosphate in a 1/1 (by volume) mixed solvent of ethylene carbonate and diethyl carbonate was injected into the battery case, then the positive electrode tub was welded to the positive electrode cover, and the said cover was caulked to make a battery.

This battery was repeatedly charged and discharged at a charge/discharge current of 300 mA and a charge/discharge termination voltage of 4.2 V and 2.8 V. Also, rapid charge and discharge were conducted by varying the charge current in the range of 300 to 900 mA.

The charge and discharge test results showed that when charge and discharge were conducted at 300 mA, the initial capacity was 762 mAh and the capacity after 100 cycles of charge and discharge was 732 mAh. On the other hand, when charge and discharge were conducted at 900 mA, the initial capacity was 759 mAh and the capacity after 100 cycles of charge and discharge was 731 mAh. Thus, when using the current collector which has gone through the surface roughening treatment according to the present invention, there takes place no serious reduction of the capacity and cycle life even when the charge and discharge rate is raised, and it is possible to produce the batteries with stabilized charge and discharge properties.

Example 6

FIG. 8 is a sectional view of a coin type battery according to the present invention. The current collectors and the depolarizing mixes for the positive electrode and the negative electrode used in this Example were produced in the same way as in Example 4. The negative electrode was made of a pellet having a diameter of 14.5 mm and an electrode thickness of 0.4 mm. The positive electrode measured 24.5 mm in diameter and 0.9 mm in electrode thickness. As shown in FIG. 8, an positive electrode current collector was previously welded to the inside bottom surface, and the positive electrode was press fitted to the positive electrode case provided with a gasket comprising an insulating packing. Then a microporous polypropylene-made separator was disposed below the positive electrode and impregnated with an electrolyte prepared by dissolving 1 mol/l of LiPF6 in a 2:1:3 mixed solvent of ethylene carbonate, propylene carbonate and diethyl carbonate. On the other hand, the negative electrode current collector was welded to the inside surface of the negative electrode case 4, and the negative electrode was press fitted to this negative electrode current collector. Then the negative electrode was placed in attachment to the said separator and the negative electrode and positive electrode cases were caulked together through a gasket to make a coin type battery.

Example 7

LiCoO$_2$ powder having an average particle size of 10 μm was used as the positive electrode active material in this Example. This positive electrode active material was sufficiently kneaded with natural graphite and a 1-methyl-2-pyrrolidone solution of polyvinylidene fluoride to prepare a positive electrode slurry. The LiCoO$_2$/natural graphite/polyvinylidene fluoride ratio by weight was 90/6/4. The slurry was coated on the surface of the positive electrode current collector made of a 20 μm thick aluminum foil by the doctor blade method. The positive electrode was a 70 mm high and 120 mm wide strip. This positive electrode was dried at 100°C for 2 hours.

The negative electrode was produced in the following way. A natural graphite powder having an average particle size of 5 μm and polyvinylidene fluoride were mixed in a ratio by weight of 90:10, to which 1-methyl-2-pyrrolidone was added as an organic solvent and kneaded well to prepare a negative electrode slurry. This slurry was coated, by the doctor blade method, on the surface of the negative electrode current collector made of a 10 μm thick as-cold-rolled copper foil and surface treated under the same conditions as Run No. 4 of Example 1. The negative electrode was a 70 mm high and 120 mm wide strip. This negative electrode was dried at 100°C for 2 hours.

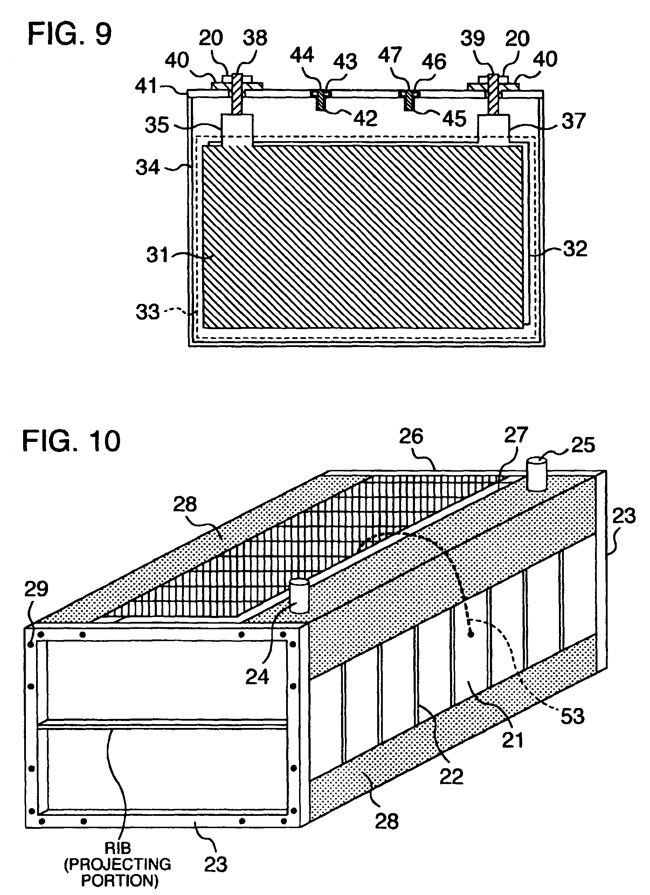

FIG. 9 is a sectional view of a square-shaped lithium secondary battery according to the present invention. This battery had the external dimensions of 100 mm x 130 mm x 30 mm. An electrode assembly comprising alternate laminations of positive electrode plates 31 and negative electrode plates 32 disposed in a pouch-like worked separator 33 was housed in an aluminum-made battery case 34. The positive electrode lead 35 and the negative electrode lead 37 welded to the top of each electrode were connected to the corresponding positive electrode terminal 38 and negative electrode terminal 39, respectively. Each of said positive electrode terminal 38 and negative electrode terminal 39 is passed through the battery cover 41 via a polypropylene-made packing 40. The battery can be connected to the external cables by means of nuts 20 secured to the positive electrode and negative electrode terminals 38 and 39. The battery cover 41 is provided with a safety valve designed to open for releasing the gas accumulated in the inside of the battery when the internal pressure in the battery has reached 4 to 7 atm, and an electrolyte inlet. The safety valve comprises a gas outlet opening 42, an O-ring 43 and a sealing bolt 44. The electrolyte inlet consists of an inlet opening 45, an O-ring 46 and a sealing bolt 47. After the battery case 34 and the battery cover 41 have been welded together by laser, the electrolyte is introduced into the battery from the inlet opening 45 and then the inlet opening 45 is closed hermetically by the sealing bolt 47 to complete a lithium secondary battery. The electrolyte used here is a solution prepared by dissolving 1 mole of lithium hexafluorophosphate (LiPF$_6$) in one litre of a mixed solvent of equal volumes of ethylene carbonate and dimethyl carbonate.

The electro-chemical energy of the battery can be taken out from the positive electrode terminal 38 and the negative electrode terminal 39 and stored by recharging. The average discharge voltage of this battery was 3.7 V and its rated capacity was 27 Ah at 100 Wh.

A plurality of the above-described square lithium secondary batteries 21, with their cover 41 facing upwards, were arranged in a row with their 100 mm high and 130 mm wide sides opposing each other to constitute a battery package consisting of 8 series-connected combined batteries shown in FIG. 10.

In the present invention, in order to confine to about 10% the loss of volumetric energy density of the battery package due to use of the spacers, the spacer thickness was defined to be 10% or less of the battery thickness. Since the thickness of the unit battery 21 was 30 mm, two pieces of 2 mm thick, 10 mm wide and 100 mm long spacer 22 made of polyethylene tetrafluoride were interposed between the opposing sides of the adjoining combined batteries 21 along the height thereof. The stainless metal plates 23 and the polyethylene tetrafluoride-made fixtures 28 provided at the front and rear ends and at the sides of the battery package, respectively, were secured in position by the bolts 29, holding the square lithium secondary batteries 21 so that a pressure would be exerted thereto inwardly. A rib-like protuberance was formed on each stainless metal plate 23 to allow quick dissipation of the heat from the batteries to the outside. The positive electrode and negative electrode terminals of the respective square lithium secondary batteries 21 were connected by the current cables so that all the batteries would be connected in series to each other, and then they were further connected to the positive electrode and negative electrode terminals 24 and 25 of the battery package. The positive electrode and negative electrode terminals of each unit battery 21 were also connected to a control circuit board 26 through an positive electrode voltage input cable and a negative electrode voltage input cable, respectively, and the voltage and current of each unit battery 21 were measured for controlling charge and discharge of the battery package. The control circuit board 26 is furnished with a microcomputer which functions to stop charge or discharge of the battery package should the voltage or current of at least one of the combined batteries run out of the setting range. The control circuit board of the present invention is a high-safety flame-retardant board comprising a printed substrate made of glass fiber and an epoxy resin containing 1% of hexabromobenzene, and the circuit elements are connected by the cables sheathed with polyethylene tetrafluoride. A thermocouple 53 is set on a side of the fourth battery from the tail end of the package, whereby temperature signal is sent to the control circuit board 26 to stop charge or discharge when the battery temperature exceeds the setting temperature. In the present Example, as the control circuit board 26 is set at the top of the battery package, a shielding plate 27 is disposed between the control circuit board 26 and the combined batteries 21 so that the electrolyte discharged from the gas outlet 42 won't adhere to the control circuit board 26. The average discharge voltage of the battery package of the present Example is 29.6 V and its rated capacity is 27 Ah at 800 Wh. The battery package of this Example is designated B1. No outer container is necessary for the battery package of the present invention, so that it is possible to cool the square lithium secondary batteries directly with atmospheric air, which contributes to suppressing the rise of temperature of the batteries at the time of rapid charge or high-load discharge.

In the above explanation of the invention, the electrode assembly comprises a laminate of strip electrodes, but it is also possible to constitute a battery package similar to that of the present Example even when the electrode assembly is an elliptical roll of the flat electrodes.

According to the present invention, when the particles are bonded to the surface of a metallic plate, especially a thin copper plate, high adhesion can be obtained by conducting the treatment comprising the step of forming a whisker-like copper oxide on the thin copper plate surface and then chemically or electrically reducing the said copper oxide, and/or the step of carrying out nickel plating thereon. As a result, there can be obtained a non-aqueous electrolyte secondary battery with excellent charge and discharge cycle performance.

INDUSTRIAL APPLICABILITY

The lithium secondary battery of the present invention can be applied to various types of portable electronic devices, especially laptop personal computers, laptop word processors, palmtop (pocket) personal computers, cellular phones, PHS, portable facsimiles, portable printers, headphone stereos, video cameras, portable TV, portable CD, portable MD, electric-powered shavers, electronic notebooks, transceivers, electric power tools, radios, tape recorders, digital cameras, portable copiers, portable play kits, electric automobiles, hybrid cars, automatic vending machines, motor-operated carts, electricity storage system for load leveling, household electric condensers, dispersion type power storage systems (built in stationary electric appliances), emergency power supply systems and the like.

**Claims**

1. A lithium secondary battery comprising a negative electrode having a negative electrode active material on the surface of a current collector made of a thin metallic plate, said active material occluding or releasing lithium ions during charge or discharge of the battery, a positive electrode having a positive electrode active material on the surface of a current collector made of a thin metallic plate, and a lithium ion conductive non-aqueous electrolyte or a polymeric electrolyte, characterized in that the substantial surface area of the current collector of at least one of said negative electrode and positive electrode is two or more times as large as the apparent surface area.

2. A lithium secondary battery comprising a negative electrode having a negative electrode active material on the surface of a current collector made of a thin metallic plate, said active material occluding or releasing lithium ions during charge or discharge of the battery, a positive electrode having a positive electrode active material on the surface of a current collector made of a thin metallic plate, and a lithium ion conductive non-aqueous electrolyte or a polymeric electrolyte, characterized in that provided that the discharge capacity after conducting discharge at a discharge current of 400 mA, an upper limit voltage of 4.2 V and a lower limit voltage of 2.5 V is 100%, the discharge capacity after conducting 200 cycles of said charge and discharge is 85% or more based on the above criterion.

3. A lithium secondary battery comprising a negative electrode having a negative electrode active material on the surface of a current collector made of a thin metallic plate, said active material occluding or releasing lithium ions during charge or discharge of the battery, a positive electrode having a positive electrode active material on the surface of a current collector made of a thin metallic plate, and a lithium ion conductive non-aqueous electrolyte or a polymeric electrolyte, characterized in that in the current collector of at least one of said negative electrode and positive electrode, a bar-like metal layer made of a metal composing said negative electrode or positive electrode is formed on the surface of said current collector where said negative electrode or positive electrode active material is formed.

4. A lithium secondary battery comprising a negative electrode having a negative electrode active material on the surface of a current collector made of a thin metallic plate, said active material occluding or releasing lithium ions during charge or discharge of the battery, a positive electrode having a positive electrode active material on the surface of a current collector made of a thin metallic plate, and a lithium ion conductive non-aqueous electrolyte or a polymeric electrolyte, characterized in that said negative electrode active material comprises flake graphite or a bulk amorphous carbon powder and a metallic powder.

5. A lithium secondary battery comprising a negative electrode having a negative electrode active material on the surface of a current collector made of a thin metallic plate, said active material occluding or releasing lithium ions during charge or discharge of the battery, a positive electrode having a positive electrode active material on the surface of a current collector made of a thin metallic plate, and a lithium ion conductive non-aqueous electrolyte or a polymeric electrolyte, characterized in that the current collector of at least one of said negative electrode and positive electrode is made of a cold-rolled thin metallic plate.

6. A lithium secondary battery according to any one of claims 1 to 5, wherein at least one of current collectors of negative electrodes and positive electrodes has on its surface a layer of a metal having higher hardness than that of the base metal of said collector.

7. A lithium secondary battery according to any one of Claims 1 to 5, wherein at least one of said negative electrode active material and positive electrode active material contains graphite comprising 20% by weight or less of rhombohedral system crystal and 80% by weight or more of hexahedral system crystal.

8. A process for producing a lithium secondary battery comprising a negative electrode having a negative electrode active material on the surface of a current collector made of a thin metallic plate, said active material occluding or releasing lithium ions during charge or discharge of the battery, a positive electrode having a positive electrode active material on the surface of a current collector made of a thin metallic plate, and a lithium ion conductive non-aqueous electrolyte or a polymeric electrolyte, characterized in that said process comprises a step in which before forming said active material on the surface of the current collector of at least one of said negative electrode and positive electrode, a whisker-like oxide layer is formed on the surface of said current collector, and then said oxide layer is reduced.

9. The process according to Claim 8, which further comprises a step in which before forming said active material on the current collector surface which has been subjected to said reducing treatment, a coating film of a metal harder than the metal of said current collector is formed on said surface.

10. A process for producing a lithium secondary battery comprising a negative electrode having a negative electrode active material on the surface of a current collector made of a thin metallic plate, said active material occluding or releasing lithium ions during charge or discharge of the battery, a positive electrode having a positive electrode active material on the surface of a current collector made of a thin metallic plate, and a lithium ion conductive non-aqueous electrolyte or a polymeric electrolyte, characterized in said process comprises a step in which after the current collector comprising a thin metallic plate of at least one of said negative electrode and positive electrode has been worked into a desired thickness by cold rolling, the worked surface is roughened and said active material is formed on this surface.

11. A composite member comprising a metallic plate having formed on its surface a thin layer made of a mixture of an inorganic powder and a resin, characterized in that a bar-like metal layer composed of the metal of said metallic plate is formed on the surface side of said metallic plate where said thin layer is formed.

FIG. 1

SUBSTANTIAL SURFACE AREA / APPARENT SURFACE AREA

Ni PLATED

NO Ni PLATING

OXIDATION TREATING TIME (SEC)

FIG. 2

RATE OF SEPARATED PARTICLES(%)

FLAKE GRAPHITE

BULK AMORPHOUS CARBON

Al POWDER

SUBSTANTIAL / APPARENT
SURFACE AREA / SURFACE AREA

## FIG. 3

Ni PLATED

RATE OF SEPARATED PARTICLES(%)

5

6 FLAKE GRAPHITE 7

AMORPHOUS CARBON, Al POWDER

SUBSTANTIAL / APPARENT
SURFACE AREA / SURFACE AREA

## FIG. 4

(ELECTROLYTIC COPPER FOIL)

RATE OF SEPARATED PARTICLES(%)

8  9

FLAKE   10
GRAPHITE  o
11

AMORPHOUS CARBON

Al POWDER
12

SUBSTANTIAL / APPARENT
SURFACE AREA / SURFACE AREA

# FIG. 5

# FIG. 6

POSITIVE

NEGATIVE

# FIG. 7

CAPACITY RETENTION RATE(%)

SUBSTANTIAL / APPARENT
SURFACE AREA / SURFACE AREA

# FIG. 8

GASKET

SEPARATOR

POSITIVE
ELECTRODE

POSITIVE
ELECTRODE
CURRENT
COLLECTOR

POSITIVE
ELECTRODE

NEGATIVE
ELECTRODE

NEGATIVE
ELECTRODE
CURRENT
COLLECTOR

NEGATIVE
ELECTRODE

## FIG. 9

## FIG. 10

RIB
(PROJECTING
PORTION)

# INTERNATIONAL SEARCH REPORT

| | International application No. |
|---|---|
| | PCT/JP99/02145 |

**A. CLASSIFICATION OF SUBJECT MATTER**
Int.Cl$^6$ H01M4/66, H01M4/70, H01M4/02, H01M4/58, H01M10/40

According to International Patent Classification (IPC) or to both national classification and IPC

**B. FIELDS SEARCHED**

Minimum documentation searched (classification system followed by classification symbols)
Int.Cl$^6$ H01M4/66, H01M4/70, H01M4/02, H01M4/58, H01M10/40

Documentation searched other than minimum documentation to the extent that such documents are included in the fields searched
Jitsuyo Shinan Koho          1926-1996   Toroku Jitsuyo Shinan Koho   1994-1999
Kokai Jitsuyo Shinan Koho   1971-1999   Jitsuyo Shinan Toroku Koho   1995-1999

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP, 5-182670, A (Sanyo Electric Co., Ltd.),<br>23 July, 1993 (23. 07. 93),<br>Page 2, column 1, lines 2 to 8 ; column 2, lines 4<br>to 11 ; page 3, column 3, line 10 to column 4,<br>line 3 (Family: none) | 1<br>7 |
| X<br>Y | JP, 9-22699, A (Toshiba Battery Co., Ltd.),<br>21 January, 1997 (21. 01. 97),<br>Page 3, column 4, lines 41 to 47 ; page 4, column 5,<br>line 41 to column 6, line 2 (Family: none) | 1<br>7 |
| X<br>Y | JP, 9-161806, A (Hitachi,Ltd.),<br>20 June, 1997 (20. 06. 97),<br>Page 2, column 1, line 34 to 45 ; page 6, column 9,<br>line 45 to page 7, column 11, line 6 ; page 9 ;<br>Fig. 5 (Family: none) | 2<br>7 |
| EX | JP, 11-167922, A (Mitsubishi Materials Corp.),<br>22 June, 1999 (22. 06. 99),<br>Page 2, column 1, lines 11 to 14 ; page 3, column 3,<br>line 5 to column 4, line 5 (Family: none) | 3, 8, 10, 11 |

| ☒ | Further documents are listed in the continuation of Box C. | ☐ | See patent family annex. |
|---|---|---|---|

\* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>24 July, 1999 (24. 07. 99) | Date of mailing of the international search report<br>24 August, 1999 (24. 08. 99) |
|---|---|
| Name and mailing address of the ISA/<br>Japanese Patent Office | Authorized officer |
| Facsimile No. | Telephone No. |

Form PCT/ISA/210 (second sheet) (July 1992)

## INTERNATIONAL SEARCH REPORT

| International application No. |
| --- |
| PCT/JP99/02145 |

C (Continuation). DOCUMENTS CONSIDERED TO BE RELEVANT

| Category* | Citation of document, with indication, where appropriate, of the relevant passages | Relevant to claim No. |
| --- | --- | --- |
| X<br>Y | JP, 9-265991, A (Matsushita Electric Industrial Co., Ltd.),<br>7 October, 1997 (07. 10. 97),<br>Page 2, column 1, lines 2 to 4 ; page 5, column 7,<br>lines 23 to 26 (Family: none) | 3<br>7 |
| X<br>Y | JP, 6-318454, A (Matsushita Electric Industrial Co., Ltd.),<br>15 November, 1994 (15. 11. 94),<br>Page 2, column 1, lines 2 to 7 ; column 2,<br>lines 27 to 43 (Family: none) | 4<br>7 |
| X<br>Y | JP, 6-260168, A (Japan Storage Battery Co., Ltd.),<br>16 September, 1994 (16. 09. 94),<br>Page 2, column 1, lines 13 to 29 (Family: none) | 5<br>7 |
| X<br>Y | JP, 7-201332, A (Nippon Foil Mfg. Co., Ltd.),<br>4 August, 1995 (04. 08. 95),<br>Page 2, column 1, lines 19 to 47 ; page 3, column 4,<br>lines 7 to 12 (Family: none) | 5<br>7 |
| Y | JP, 8-287910, A (Hitachi,Ltd.),<br>1 November, 1996 (01. 11. 96),<br>Page 2, column 1, lines 2 to 13 ; page 4, column 5,<br>line 32 to page 5, column 7, line 24<br>& EP, A, 738018 | 7 |
| Y | JP, 5-159781, A (Sanyo Electric Co., Ltd.),<br>25 June, 1993 (25. 06. 93),<br>Page 2, column 1, lines 2 to 6 (Family: none) | 6 |
| Y | JP, 9-259866, A (FDK Corp.),<br>3 October, 1997 (03. 10. 97),<br>Page 2, column 1, lines 2 to 9 (Family: none) | 6 |

Form PCT/ISA/210 (continuation of second sheet) (July 1992)